# EUROPEAN PATENT APPLICATION

(11) **EP 4 603 788 A1**
(43) Date of publication of application: **20.08.2025**
(21) Application number: 25156432.4
(22) Date of filing: 07.02.2025
(51) Int. Cl.: G01B 7/14, F03D 13/30, F03D 17/00, G01B 21/16, H02K 7/18

(54) **APPARATUS FOR MEASURING WIND POWER GENERATOR AIR GAP**

(30) Priority: 14.02.2024 KR 20240021306
(71) Applicant: Doosan Enerbility Co., Ltd., Seongsan-gu Changwon-si, Gyeongsangnam-do 51711 (KR)
(72) Inventor: KIM, Young Pil, 17090 Gyeonggi-do (KR)
(74) Representative: Ter Meer Steinmeister & Partner

(57) **Abstract**

An apparatus for measuring a wind power generator air gap is disclosed. The apparatus is capable of measuring a measure (air gap) of a large structure with a diameter exceeding several meters which constitutes a wind power generator and verifying reliability of the air gap before assembly. The apparatus includes a support with a rotating driver therein, a first frame having an inner end fixed on the support, a second frame provided above the first frame at an interval, a spacer provided below the second frame, a turning bearing fixing the first frame and rotating the second frame, n (n is a natural number) dummy magnets provided on an outer end of the first frame, n (n is a natural number) dummy coils provided on an outer end of the second frame, and an air gap measuring means measuring an air gap between the dummy magnets and the dummy coils.

## Description

### BACKGROUND OF THE INVENTION

### Field of the Invention

The present disclosure relates to an apparatus for measuring a wind power generator air gap, the apparatus being capable of measuring an air gap of a large structure with a diameter exceeding several meters which constitutes a wind power generator, and verifying the reliability of the air gap before assembly in advance.

### Description of the Related Art

Wind power generation is a method of generating electricity by using windmills to convert wind energy into mechanical energy (rotational power), and then driving a generator to convert the mechanical energy into electrical energy.

Wind power generation is the most economical of all the renewable energy sources developed currently. In addition, since power can be generated using wind, which is an infinite and cost-free source of clean energy, active investment in wind power generation is being made in Europe, America, Asia, and other regions.

The wind power generator for wind power generation is divided into a vertical wind power generator and a horizontal wind power generator according to a direction of a rotating shaft. Until now, the horizontal wind power generator has higher efficiency and is more stable than the vertical wind power generator, so most commercial wind power wind plants use horizontal wind power generators.

### SUMMARY OF THE INVENTION

An objective of the present disclosure is to provide an apparatus for measuring a wind power generator air gap.

The apparatus being capable of measuring a measure (air gap) of a large structure with a diameter exceeding several meters which constitutes a wind power generator, and verifying the reliability of the air gap before assembly in advance.

The object is solved by the features of the independent claims. Preferred embodiments are given in the dependent claims.

According to an embodiment of the present disclosure, there is provided an apparatus for measuring a wind power generator air gap, the apparatus including: a support in which a rotating driver may be provided; a first frame having an inner end fixed on the support; a second frame provided above the first frame at an interval; a spacer provided below the second frame; a turning bearing fixing the first frame and rotating the second frame; n (n is a natural number) dummy magnets provided on an outer end of the first frame; n (n is a natural number) dummy coils provided on an outer end of the second frame; and an air gap measuring means measuring an air gap between the dummy magnets and the dummy coils.

The first frame and the second frame may be annular frames.

An inner end of each frame may be formed horizontally.

An outer end thereof may be formed vertically

The inner end and the outer end may be connected to each other with a connecting part formed to be inclined.

The turning bearing may include an outer race disposed at an outside part, an inner race disposed at an inside part, and a ball interposed between the outer race and the inner race.

The outer race may be coupled to an upper surface of the inner end of the first frame, and the inner race may be coupled to the spacer.

A gear formed on an outer surface of the inner race may be engaged with a pinion formed on an outer surface of the rotating driver and the inner race may rotate in response to rotation of the rotating driver.

The spacer may be coupled to the inner race, and when the inner race rotates in response to rotation of the rotating driver, the spacer may rotate with the inner race.

The n dummy magnets and the n dummy coils may be respectively provided on opposing positions at the outer end of the first frame and the outer end of the second frame.

The n dummy magnets and the n dummy coils may be respectively located to be spaced apart from each other at even distances in the outer end of the first frame and the outer end of the second frame.

The air gap measuring means may be a plurality of measuring rods processed such that a width size is increased and reduced by a base unit from a reference width.

The air gap measuring means may be a distance measuring sensor provided at one of the dummy coils or the dummy magnets.

The first frame may be a stator frame, and the second frame is a rotor frame.

The first frame may be a rotor frame, and the second frame may be a stator frame.

Specific details of embodiments according to various aspects of the present disclosure are included in the detailed description below.

According to the embodiment of the present disclosure, the apparatus for measuring a wind power generator air gap can verify the uniformity of the air gap in the process of assembly and maintenance of the wind power generator, and as the wind power generator is assembled and maintained, the reliability of the air gap can be secured.

### BRIEF DESCRIPTION OF THE DRAWINGS

FIG. 1 is a side view illustrating a wind power generator.
FIG. 2 is a sectional view illustrating an internal structure of a rotor housing of the wind power generator.
FIG. 3 is a sectional view illustrating an apparatus for measuring a wind power generator air gap according to an embodiment of the present disclosure.
FIG. 4 is a perspective view illustrating the apparatus for measuring a wind power generator air gap according to an embodiment of the present disclosure.
FIG. 5 is a sectional view illustrating a part of the apparatus for measuring a wind power generator air gap according to another embodiment.

### DETAILED DESCRIPTION OF THE DISCLOSURE

The present disclosure may be variously modified and may have various embodiments, so examples of which are illustrated and will be described in detail in the detailed description. However, it should be understood that the present disclosure is not limited to the embodiments which will be described hereinbelow, but various modifications, equivalents, additions and substitutions are possible, without departing from the scope of the present disclosure.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprise", "include", "have", etc., when used in this specification, specify the presence of stated features, integers, steps, operations, elements, components, and/or combinations of them but do not preclude the presence or addition of one or more other features, integers, steps, operations, elements, components, and/or combinations thereof.

Hereinbelow, exemplary embodiments of the present disclosure will be described in detail with reference to the accompanying drawings. When inserting reference numerals into the components in the respective drawings, although the same components are illustrated in the different drawings, they are described to have the same reference numeral as far as possible. Furthermore, detailed descriptions of known functions and configurations which are deemed to make the gist of the present disclosure obscure will be omitted. For the same reason, some components in the accompanying drawings may be exaggerated, omitted, or simplified.

Hereinbelow, a wind power generator and an apparatus for measuring a wind power generator air gap will be described with reference to accompanying drawings.

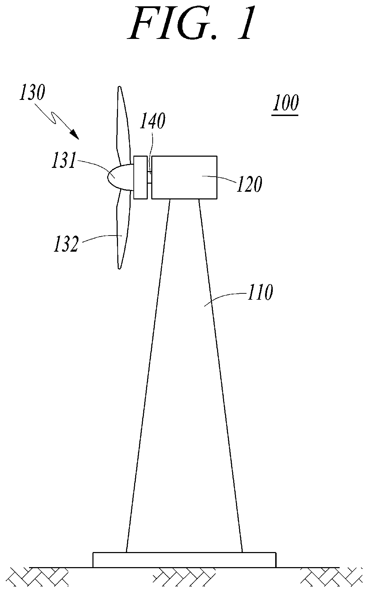

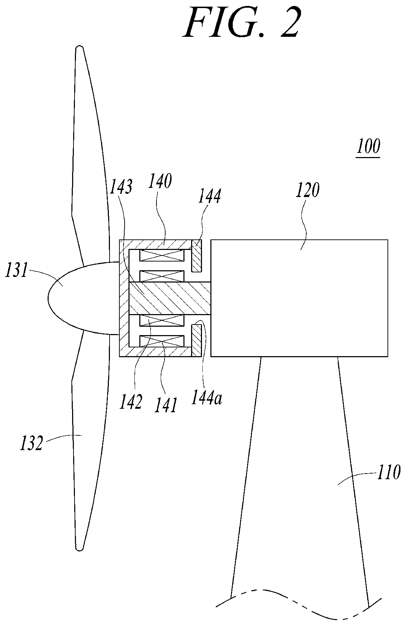

FIG. 1 is a side view illustrating a wind power generator. FIG. 2 is a sectional view illustrating an internal structure of a rotor housing of the wind power generator.

Depicted in FIGS. 1 and 2 is a wind power generator 100 that includes a tower 110, a nacelle 120, a rotor 130, and a rotor housing 140.

The tower 110 is erected and installed at a constant height on ground and sea, and supports the nacelle 120 and the rotor 130. The tower 110 may have a tubular form in which a diameter is increased in a downward direction. At this point, the tower 110 may have a multistage form in which multiple tubular members are stacked. Meanwhile, the inside space of the tower 110 may be equipped with stairs, conveyors, or elevators to transport workers or work tools for maintenance.

On an upper portion of the tower 110, the nacelle 120 may be installed to be capable of yawing with respect to the tower 110. The nacelle 120 may be located at the upper portion of the tower 110 and may be coupled to the tower 110 to be rotatable relative to a lower portion of the tower 110.

The nacelle 120 may be a structure having a casing form, which is disposed at the upper portion of the tower 110, and may be rotatably disposed at the upper portion of the tower 110 by a motor and a bearing. A speed change device, a generation device, etc. may be disposed inside the nacelle 120.

The rotor 130 consists of a hub 131 and multiple blades 132, and the hub 131 is rotatably installed on a front surface of the nacelle 120. In addition, the multiple blades 132 are coupled to an outer circumferential surface of the hub 131 in a circumferential direction at preset intervals.

The hub 131 may have a conical form that protrudes forward convexly to reduce the wind resistance. The blades 132 rotate on a center shaft of the hub 131 by wind. The blades 132 have a widthwise-streamlined section, and has a void part inside.

The rotor housing 140 may be a cylindrical structure and disposed between the hub 131 and the nacelle 120.

A first side part of the rotor housing 140 may be connected to the hub 131. Accordingly, when the hub 131 rotates, the rotor housing 140 rotates with the hub. A rotor 141 may be disposed in a ring form on an inner circumferential surface of the rotor housing 140. At this point, the rotor 141 may be a structure generating magnetism, such as a permanent magnet, an electromagnet, and the like.

A stator 142 generating magnetism, such as a permanent magnet, an electromagnet, and the like, may be disposed at a central portion of the rotor housing 140, and the ring-shaped rotor 141 may have a form covering the stator 142. In addition, the stator 142 may be connected to the nacelle 120 through a supporting frame 143.

A cover 144 is coupled to a second side part of the rotor housing 140, and the rotor 141 and the stator 142 may be stored in the rotor housing 140. The supporting frame 143 may pass through a cover hole 144a formed in the cover 144 and be connected to the nacelle 120. In addition, to allow efficient rotation of the rotor housing 140, a bearing may be disposed between the cover hole 144a and the supporting frame 143.

At this point, a preset constant interval between the rotor 141 and the stator 142 may be referred to as "an air gap."

Meanwhile, when the air gap is uneven, the following problems may occur.
i) Efficiency reduction: when an air gap is excessively large, wind power is not utilized effectively, and when an air gap is small, rotation resistance is increased and generation efficiency may be reduced.
ii) Noise and vibration: due to an uneven air gap, the rotor and the stator collide with each other or unstable movement may occur, which may generate noise and vibrations and shorten lifespan thereof.
iii) Damage and defect of parts: when unevenness of the air gap continues, load may be applied to components of the rotor and the stator and cause wear and damage, leading to failure in the long term.
iv) Safety problem: when an air gap is widened in the generator rotating at high speed, serious safety problems may occur.

For these reasons, it is important to maintain uniformity of an air gap in processes of design and maintenance of the wind power generator. Accordingly, the present disclosure discloses an apparatus for measuring a wind power generator air gap, and the apparatus can measure an air gap to verify the reliability of the air gap before assembly.

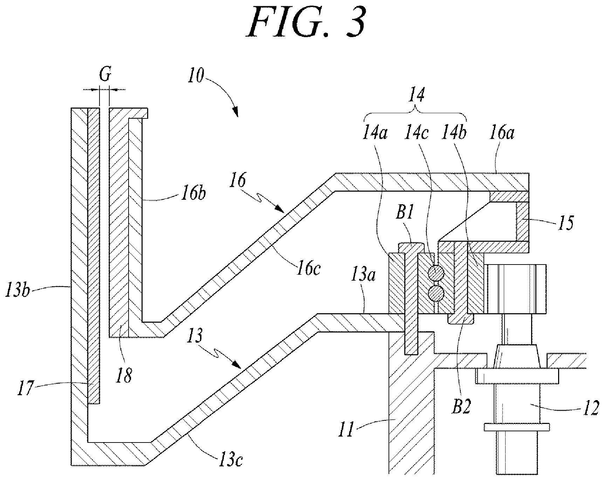

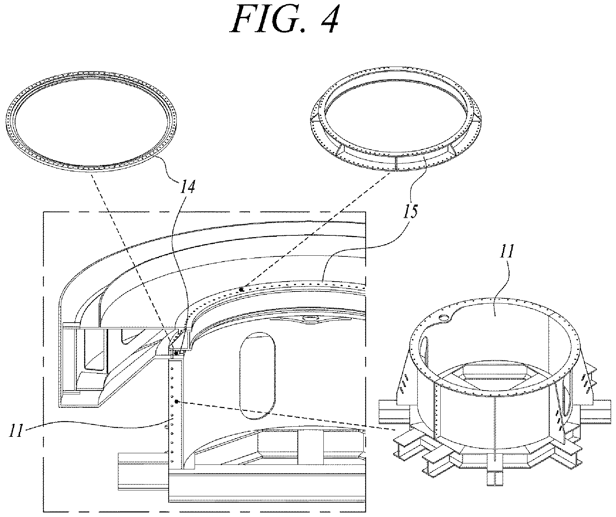

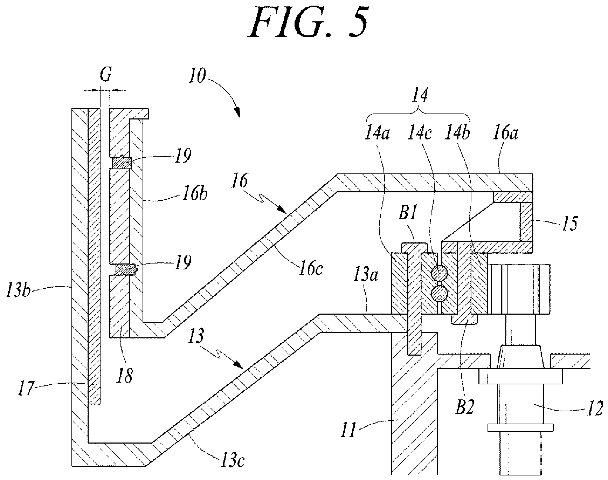

According to the embodiment of the present disclosure, the apparatus for measuring a wind power generator air gap will be described with reference to FIGS. 3 to 5. FIG. 3 is a sectional view illustrating an apparatus for measuring a wind power generator air gap according to an embodiment of the present disclosure. FIG. 4 is a perspective view illustrating the apparatus for measuring a wind power generator air gap according to an embodiment of the present disclosure. FIG. 5 is a sectional view illustrating a part of the apparatus for measuring a wind power generator air gap according to another embodiment.

Referring to FIGS. 3 and 4, according to the embodiment of the present disclosure, an apparatus 10 for measuring a wind power generator air gap includes a support 11, a rotating driver 12, a first frame 13, a turning bearing 14, a spacer 15, a second frame 16, a dummy magnet 17, a dummy coil 18, and an air gap measuring means 19.

The support 11 has a cylindrical form in which an inner space is provided, and the rotating driver 12 is installed inside the support 11. The support 11 may be installed on a surface plate that is a hard, flat plate used as a base horizontal reference surface.

The first frame 13 is an annular frame, an inner end 13a may be formed horizontally, an outer end 13b may be formed vertically, and the inner end 13a and the outer end 13b may be formed to be connected to each other through an inclined connecting part 13c. In addition, the inner end 13a of the first frame 13 is securely installed on the support 11, and the dummy magnet 17 is installed at the outer end 13b. The first frame 13 may be for example a rotor frame 141a.

The second frame 16 is an annular frame corresponding to the form of the first frame 13. Similar to the first frame 13, an inner end 16a may be formed horizontally, an outer end 16b may be formed vertically, and the inner end 16a and the outer end 16b may be formed to be connected to each other through an inclined connecting part 16c. In addition, the inner end 16a of the second frame 16 is fixed to an upper surface of the spacer 15, and the dummy coil 18 is installed at the outer end 16b. The second frame 16 may be for example a stator frame 142a.

Of course, according to a design, the first frame 13 may serve as the stator frame 142a, and the second frame 16 may serve as the rotor frame 141a. The first frame 13 and the second frame 16 may be the rotor frame 141a and the stator frame 142a after manufacturing is complete but before assembly is performed in a manufacturing process of a wind power generator.

The turning bearing 14 fixes the first frame 13 and rotates the second frame 16. The turning bearing 14 has an annular structure, and includes an outer race 14a disposed at the outer side, an inner race 14b disposed at the inner side, and a ball 14c disposed between the outer race 14a and the inner race 14b.

The outer race 14a may be coupled to the upper surface of the inner end 13a of the first frame 13, and the inner race 14b may be coupled to the spacer 15. Specifically, the outer race 14a, the inner end 13a of the first frame, and the support 11 are connected to each other by fastening with a first bolt B1, and the inner race 14b and the spacer 15 may be connected to each other by fastening with a second bolt B2.

In addition, a gear formed on an outer surface of the inner race 14b may be engaged with a pinion formed on an outer surface of the rotating driver 12 and the inner race 14b may rotate in response to rotation of the rotating driver 12.

The spacer 15 has an annular form, and is installed at an upper portion of the turning bearing 14 and at a lower portion of the inner end 16a of the second frame 16. In addition, the inner end 16a of the second frame 16 may be fixed to the upper portion of the spacer 15. The spacer 15 is coupled to the inner race 14b. When the inner race 14b rotates in response to the rotation of the rotating driver 12, the spacer 15 rotates with the inner race 14b, and the second frame 16 fixed to the upper portion of the spacer 15 may rotate with the spacer 15.

The dummy magnet 17 and the dummy coil 18 are installed to face each other at the outer ends 13b and 16b of the first frame 13 and the second frame 16. The dummy magnet 17 and the dummy coil 18 have only predetermined volumes and no magnetism. A plurality of dummy magnets 17 and a plurality of dummy coils 18 are provided on the annular outer ends 13b and 16b and spaced apart from each other at uniform distances. For example, when 8 dummy magnets 17 and 8 dummy coils 18 are provided, the dummy magnets 17 and the dummy coils 18 are installed to be spaced 45 degrees apart from each other around the central portion.

The air gap measuring means 19 measures an air gap G between the dummy magnet 17 and the dummy coil 18.

According to the embodiment, the air gap measuring means 19 may be a plurality of measuring rods processed into precise measures. The air gap measuring means 19 may be a plurality of measuring rods processed such that a width size is increased and reduced by a base unit (e.g., 0.1mm) from a reference width.

Specifically, when a constant interval between the first frame 13 and the second frame 16 is 10mm, the width of the plurality of measuring rods may be processed to a unit from 9.5mm and 10.5mm to 0.1mm.

According to another embodiment, as illustrated in FIG. 5, the air gap measuring means 19 may be a distance measuring sensor provided at a predetermined position of the dummy coil 18. It is sufficient for the distance measuring sensor, such as a proximity sensor, an ultrasonic sensor, an infrared sensor, etc., to be a sensor that can measure an interval, and a type thereof is not limited. Of course, the distance measuring sensor may be installed at a predetermined position of the dummy magnet 17, not at the dummy coil 18.

Next, according to the embodiment of the present disclosure having the above configuration, an operation process of the apparatus for measuring a wind power generator air gap will be described.

First, the first frame 13 and the turning bearing 14 are located at the upper portion of the support 11 and are fixed with the first bolt B1. Then, the second frame 16 is fixed to the upper portion of the spacer 15.

Next, the dummy magnets 17 are installed at the outer end 13b of the first frame 13, and the dummy coils 18 may be installed at the outer end 16b of the second frame 16. For example, 8 dummy magnets 17 and 8 dummy coils 18 are installed to be spaced evenly apart from each other. Of course, after the dummy magnets 17 and the dummy coils 18 are installed, the first frame 13 and the second frame 16 may be fixed.

Next, the rotating driver 12 is driven and the turning bearing 14 rotates. At this point, the inner race 14b of the turning bearing 14 rotates, and the outer race 14a does not rotate. According to rotation of the inner race 14b of the turning bearing 14, the spacer 15 coupled to the inner race 14b rotates with the inner race, and the second frame 16 coupled to the upper portion of the spacer 15 rotates with the spacer.

More specifically, the rotating driver 12 is driven until one dummy magnet (first dummy magnet) and one dummy coil (first dummy coil) are positioned at facing positions.

Next, an interval between the first dummy magnet and the first dummy coil is measured. At this point, the plurality of measuring rods is used to measure the interval manually, or the distance measuring sensor installed at a predetermined position of the dummy coil 18 is used to measure the interval automatically. At this point, an nth dummy magnet and an nth dummy coil are positioned at facing positions, so an interval between an nth dummy magnet and an nth dummy coil may also be measured.

Next, until the first dummy magnet and the second dummy coil are positioned at facing positions, the rotating driver 12 is driven, and an interval between the first dummy magnet and the second dummy coil is measured. At this point, an nth dummy magnet and an nth +1 dummy coil are positioned at facing positions, so an interval between an nth dummy magnet and an nth +1 dummy coil may also be measured.

This process is repeated to measure intervals between all of the dummy magnets and the dummy coils.

The results of measuring the air gap through the above process will be used as follows.
i) Measuring widths of actual assembled magnets and grouping widths for each tolerance range
ii) Measuring widths of actual assembled coils and grouping widths for each tolerance range
iii) Selecting a magnet and a coil having corresponding sizes among the grouped magnets the grouped coils based on the air gap result and performing actual assembly

Therefore, as described above, according to the embodiment of the present disclosure, the apparatus for measuring a wind power generator air gap can verify the uniformity of the air gap in the process of assembly and maintenance of the wind power generator. Accordingly, as the wind power generator is assembled and maintained, the reliability of the air gap can be secured.

Although the preferred embodiments of the present disclosure have been, disclosed, those skilled in the art will appreciate that various modifications, additions, substitutions, and deletions of components are possible, without departing from the scope of the present disclosure as disclosed in the accompanying claims, this is also included within the scope of rights of the present disclosure.

## Claims

1. An apparatus for measuring a wind power generator air gap, the apparatus (10) comprising:
a support (11) in which a rotating driver (12) is provided;
a first frame (13) having an inner end (13a) fixed on the support;
a second frame (16) provided above the first frame at an interval;
a spacer (15) provided below the second frame;
a turning bearing (14) fixing the first frame and rotating the second frame;
n (n is a natural number) dummy magnets (17) provided on an outer end (13b) of the first frame;
n (n is a natural number) dummy coils (18) provided on an outer end (16b) of the second frame; and
an air gap measuring means (19) measuring an air gap between the dummy magnets and the dummy coils.

2. The apparatus of claim 1, wherein the first frame (13) and the second frame (16) are annular frames, and the inner end (13a, 16a) of each frame is formed horizontally, the outer end (13b, 16b) thereof is formed vertically, and the inner end and the outer end are connected to each other with a connecting part (13c, 16c) formed to be inclined.

3. The apparatus of claim 1 or claim 2, wherein the turning bearing (14) comprises an outer race(14a) disposed at an outside part, an inner race (14b) disposed at an inside part, and a ball (14c) interposed between the outer race and the inner race.

4. The apparatus any one of claim 1 to claim 3, wherein the outer race(14a) is coupled to an upper surface of the inner end(13a) of the first frame, and the inner race(14b) is coupled to the spacer (15).

5. The apparatus any one of claim 1 to claim 4, wherein the outer race (14a), the inner end (13a) of the first frame, and the support (11) are coupled to each other by a first bolt (B1), and the inner race (14b) and the spacer (15) are coupled to each other by a second bolt (B2).

6. The apparatus any one of claim 1 to claim 5, wherein a gear formed on an outer surface of the inner race (14b) is engaged with a pinion formed on an outer surface of the rotating driver (12) and the inner race rotates in response to rotation of the rotating driver.

7. The apparatus any one of claim 1 to claim 6, wherein the spacer (15) is coupled to the inner race (14b), and when the inner race rotates in response to rotation of the rotating driver (12), the spacer rotates with the inner race.

8. The apparatus any one of claim 1 to claim 7, wherein the n dummy magnets (17) and the n dummy coils (18) are respectively provided on opposing positions at the outer end (13b) of the first frame and the outer end (16b) of the second frame.

9. The apparatus any one of claim 1 to claim 8, wherein the n dummy magnets (17) and the n dummy coils (18) are respectively located to be spaced apart from each other at even distances in the outer end (13b) of the first frame and the outer end (16b) of the second frame.

10. The apparatus any one of claim 1 to claim 9, wherein the air gap measuring means (19) is a plurality of measuring rods processed such that a width size is increased and reduced by a base unit from a reference width.

11. The apparatus any one of claim 1 to claim 10, wherein the air gap measuring means (19) is a distance measuring sensor provided at one of the dummy coils (18) or the dummy magnets (17).

12. The apparatus any one of claim 1 to claim 11, wherein the distance measuring sensor is one of a proximity sensor, an ultrasonic sensor, or an infrared sensor.

13. The apparatus any one of claim 1 to claim 12, wherein the first frame is a stator frame (142a), and the second frame is a rotor frame (141a).

14. The apparatus any one of claim 1 to claim 12, wherein the first frame is a rotor frame(141a), and the second frame is a stator frame (142a).

15. The apparatus any one of claim 1 to claim 14, wherein the dummy magnets (17) and the dummy coils (18) only have a volume, but no magnetism.
